(19) Europäisches Patentamt
European Patent Office
Office européen des brevets

(11) Publication number: 0 403 205 A1

# (12) EUROPEAN PATENT APPLICATION

(21) Application number: **90306346.9**

(22) Date of filing: **11.06.90**

(51) Int. Cl.5: **B01F 17/00, C10M 173/00, C10M 141/08, //(C10M173/00, 129:40,129:42,135:10), (C10M141/08,129:40,129:42, 135:10),C10N40:20**

(30) Priority: **16.06.89 GB 8913945**

(43) Date of publication of application: **19.12.90 Bulletin 90/51**

(84) Designated Contracting States: **AT BE CH DE DK ES FR GB GR IT LI LU NL SE**

(71) Applicant: **EXXON CHEMICAL PATENTS INC.**
**200 Park Avenue**
**Florham Park New Jersey 07932(US)**

(72) Inventor: **De Montlaur, George Villardi**
**6 Rue Ballu**
**F-75009 Paris(FR)**
Inventor: **De Croocq, Serge**
**Res. Touret du Vallier, Batiment B.,**
**Apartment 9**
**F-13500 Martigues(FR)**
Inventor: **Boreaux, Guy Yves Eugene**
**814 Rue Abbe Eliot**
**F-27310 Bourg Hachard(FR)**
Inventor: **Wallaert, Bernard Victor Raimond**
**40, Rue de la Plaine**
**F-27640 Bonsecours(FR)**

(74) Representative: **Bawden, Peter Charles et al**
**EXXON CHEMICAL LIMITED EXXON CHEMICAL TECHNOLOGY CENTRE PO Box 1**
**Abingdon Oxfordshire OX13 6BB(GB)**

## (54) Emulsifier systems.

(57) An emulsifier system for oil in water emulsions is a mixture of salts of a sulphonic acid and a di-carboxylic acid containing from 10-500 carbon atoms together with a $C_5$-$C_{25}$ monocarboxylic acid or its salt, a coupling agent and/or a non-ionic emulsifier have the benefits of power emulsifying power with reduced foaming and corrosive tendencies.

EP 0 403 205 A1

## EMULSIFIER SYSTEMS

The present invention relates to emulsifier systems particularly for use in aqueous fluids; especially aqueous cutting fluids and hydraulic fluids, emulsifiable oils suitable for incorporation into water for production of such fluids, additives and additive concentrates including the emulsifier system for incorporation into such fluids and emulsifiable oils.

Emulsified oils are now used in a large number of machining operations due to an industry demand for higher production rates, lower costs, improved environmental conditions and better operator acceptance. Emulsions are generally used where cooling is more important than lubrication. Although neat oils may still be used in operations such as broaching, deep drilling, or where surface finish is particularly critical, the development of extreme pressure additives for emulsions has increased their applicability and use.

The emulsions are generally prepared from emulsifiable oils supplied to the final user for incorporation into the water. The emulsifiable oils frequently contain additives which can be supplied as an additive package, formulation or concentrate to the producer of the emulsifiable cutting oil. The invention relates to emulsifier systems which may form part of the additive package, additive packages, concentrates, emulsifiable oils and water/oil fluids containing the emulsifier system. Amongst the various types of fluids, there is a marked trend towards those having an optimised combination of lubricating, cooling and long-life properties. Such fluids are obtained by micro-emulsification of a base oil frequently formulated with anti-corrosion and biostability agents. The micro-emulsion type of cutting fluid has good stability due to the very small size of their hydrocarbon droplets which do not tend to coalesce during storage. Although this feature is an advantage over conventional fluids forming white emulsion whose hydrocarbon droplet size is much larger, where formulation with water-soluble biostability agents is difficult or emulsifier system is applicable to both types of emulsions.

Aqueous metal working fluids have been known for many years and different additives have been developed to provide oils useful for different types of metal working and for use with different types of water. Many emulsifier systems have been proposed. For example United Kingdom Patent 1476841 proposes the use of mixtures of the salts of high and low molecular weight sulphonic acids. United States Patent 4770803 suggests the use of various derivatives of polyisobutenyl succinic acid and anhydrides.

For a long time natural sulfonates have been employed as emulsifiers. They are not expensive materials but, they have disadvantages. Thus they are not very constant in their quality, and hence in their emulsifying properties. In order to improve the emulsifying powers of these known sulfonates it is customary to associate with them secondary surface active agents of different types, more especially non-ionic types or fatty acid salts. But, to achieve consistent results, the amount of these secondary compounds required differ according to the quality of the sulfonate being employed.

Whilst these systems have proved satisfactory in certain instances their effectiveness depends to a large extent on the oil with which they are used and extensive reformulation may be needed when the nature of the oil changes. In addition the products are often used with nitrogen containing additives which is undesirable.

It is also known from, for example, United States Patents 2999564, 3764593, 3769214 and 4400284, that mixtures of boric acid and alkanolamines, to which fatty acids having from 18 to 22 carbon atoms are optionally added; yield water-soluble metal working fluids; boric acid providing resistance to bacterial formation. However, apart from an insufficient corrosion-inhibiting effect, these fluids have the disadvantage of foaming during use. Also the presence of boron and to a lesser extent nitrogen can lead to environmental problems upon disposal of the used fluid. It has also been proposed in United States Patent 3371047 that salts of the alkanolamines and hydroxy carboxylic acids, such as citric acid, tartaric acid may be used optionally together with boron containing compounds in an oil free metal coating formulation using an excess of acid relative to the alkanol-amine United Kingdom Patent 1345593 discloses the use of similar salts in oil free systems for metal coating.

United States Patent 4129509 suggests that the use of metal tartrates and citrates is a convenient way of introducing metal ions into a cutting oil. In this patent the quantity of acid introduced is extremely small.

Hydraulic fluids are used in many mechanical operations and are generally oil in water emulsions. Whilst foaming is less critical than in metal working it is important in many uses that these fluids have good bio-stability and, especially in applications such as hydraulic supports for rooves in mines that a stable emulsion can be formed with the water that is naturally available on site which can be very hard containing large amounts of calcium.

We have now found according to the present invention a more flexible and cheaper emulsifier system which may be used to produce nitrogen free water based fluids which can also be used without an

antifoam.

The invention therefore provides an emulsifier system comprising a mixture of salts of

(i) a sulphonic acid,

(ii) a di-carboxylic acid containing from 10-500 carbon atoms together with one or more materials selected from

(a) a $C_5$-$C_{25}$ monocarboxylic acid or salt thereof

(b) a coupling agent

(c) a non-ionic emulsifier

The invention also provides additive concentrates for incorporation into emulsifiable oils containing the above emulsifier system.

The invention further provides emulsifiable oils containing the above emulsifier system.

In a further aspect the invention provides oil/water fluids containing the above emulsifier system.

The emulsifier system of the present invention may contain other additives and may be supplied as an aqueous solution for incorporation into oil generally together with other additives to produce the emulsifiable oil of the invention. The emulsifiable oil may then be supplied to the ultimate user who will incorporate the oil into water to produce the aqueous composition of the invention traditionally used in metal working.

Where the fluids of the present invention are aqueous metal working fluids they may be water in oil emulsions or oil in water emulsions, largely depending upon whether lubrication or cooling is the more important. We are, however, particularly concerned with the currently more popular high water content micro emulsion cutting fluids.

The emulsifier system may be supplied as a solution or an emulsion for incorporation into oil or the bulk of the water. The solution may be in oil or water and if in oil it will generally contain some water.

The preferred salts of sulphonic acids used in the emulsifier system are salts of alkylaryl sulfonic acids and of an organic or mineral base. Additional flexibility may be provided in the system by using sulphonic acids whose molecular weights are distributed in accordance with the function $C = f(M)$, where C denotes concentration and M denotes molecular weight of individual acids, which function has two distinct molecular weight maximum $M_1$ and $M_2$, with $M_1 > M_2$ $M_2$ is described in our United Kingdom Patent 1476841.

These sulfonic acid salts may be either inorganic or organic. The preferred inorganic salts are potassium salts since their use reduces gelling problems which can arise with other salts. However, ammonium salts, or those of the other alkali metals, or of the alkaline earth metals are possible. The organic bases which may be employed are nitrogen bases, for example, a primary, secondary or tertiary amine, a polyamine, an alkanolamine etc. The preferred organic bases are monoethanolamine, diethanolamine, triethanolamine.

We prefer that the value of $M_1$ should be at least 270. The value of $M_1$ may be 270 to 360, but is preferably 270 to 400 and is more preferably from 360 to 400. In general, the value of $M_2$ should be from 350 to 700 and is preferably from 450 to 500.

It is preferred that the alkyl groups of the alkylaryl sulfonates are branched-chain alkyl groups since improved emulsion stability is often found in such cases. Accordingly, it is preferred that at least a proportion of the sulphonic acid in the emulsifier composition is made up of branched-chain alkyl type compounds. Preferably a major proportion, and most preferably all, the sulphonic acid is of such compounds. Highly preferred are alkylaryl sulfonates derived from benzene and orthoxylene, especially when the alkyl groups are branched-chain, for examples, when propylene, butene or isobutylene oligomers are used for alkylation.

The high molecular weight carboxylic acid used in the systems of this invention are preferably hydrocarbyl-substituted carboxylic acids and anhydrides made by reacting one or more alpha-beta olefinically unsaturated carboxylic acid or anhydride reagents containing two to about 20 carbon atoms, exclusive of the carboxyl-based groups, with one or more olefins containing at least about 12 carbon atoms, as described more fully hereinafter.

The alpha-beta olefinically unsaturated carboxylic acids and anhydrides may be either monobasic or polybasic in nature. Exemplary of the monobasic alpha-beta olefinically unsaturated carboxylic acids include the carboxylic acids corresponding to the formula:

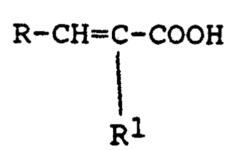

wherein R is hydrogen, or a saturated aliphatic or alicyclic, aryl, alkylaryl or heterocyclic group, preferably hydrogen or a lower alkyl group, and $R_1$ is preferably hydrogen or a lower alkyl group. The total number of carbon atoms. Specific examples of useful monobasic alpha-beta olefinically unsaturated carboxylic acids include acrylic acid; methacrylic acid; cinnamic acid; crotonic acid; 3-phenyl propenoic acid; alpha, beta-decanoic acid, etc. The polybasic acids are preferably dicarboxylic, although tri- and tetracarboxylic acids can be used. Exemplary polybasic acids include maleic acid, fumaric acid, mesaconic acid, itaconic acid and citraconic acid. The alpha-beta olefinically unsaturated carboxylic anhydrides can be the anhydride derivative of any of the foregoing acids. A preferred alpha-beta olefinically unsaturated carboxylic anhydride reagent is maleic anhydride.

In general, the hydrocarbyl substituents present in the hydrocarbyl-substituted carboxylic acids and anhydrides are free from acetylenic unsaturation; ethylenic unsaturation, when present is generally such that there is no more than one ethylenic linkage present for every ten carbon-to-carbon bonds in the substituent. The substituents are often completely saturated and therefore contain no ethylenic unsaturation. These hydrocarbyl substituents have an average of preferably from about 12 to about 500 carbon atoms, more preferably from about 16 to about 500 carbon atoms, more preferably from about 20 to about 500 carbon atoms, more preferably from about 30 to about 500 carbon atoms, more preferably from about 40 to about 500 carbon atoms, more preferably from about 50 to about 500 carbon atoms. These hydrocarbyl substituents are preferably alkyl or alkenyl groups.

These hydrocarbyl substituents are preferably derived from olefin polymers or chlorinated analogs thereof. The olefin monomers from which the olefin polymers are derived are polymerizable olefins and monomers characterized by having one or more ethylenic unsaturated groups. They can be monoolefinic monomers such as ethylene, propylene, butene-1, isobutene and octene-1 or polyolefinic monomers (usually di-olefinic octene-1 or polyolefinic monomers (usually di-olefinic monomers such as butadiene-1, 3 and isoprene). Usually these monomers are terminal olefins, that is, olefins characterized by the presence of the group $>C=CH_2$. However, certain internal olefins can also serve as monomers (these are sometimes referred to as medial olefins). When such medial olefin monomers are used, they normally are employed in combination with terminal olefins to produce olefin polymers which are inter-polymers. Although the hydrocarbyl substituents may also include aromatic groups (especially phenyl groups and lower alkyl and/or lower alkoxy-substituted phenyl groups such as para(tertiary butyl)-phenyl groups) and alicyclic groups such as would be obtained from polymerizable cyclic olefins or alicyclic-substituted polymerizable cyclic olefins. The olefin polymers are usually free from such groups. Nevertheless, olefin polymers derived from such interpolymers of both 1, 3-dienes and styrenes such as butadiene-1, 3 and styrene or para(tertiary butyl) styrene are exceptions to this general rule.

Generally the olefin polymers are homo- or interpolymers of terminal hydrocarbyl olefins of about two to about 16 carbon atoms. A more typical class of olefin polymers is selected from that group consisting of homo- and interpolymers of terminal olefins of about two to about six carbon atoms, especially those of about two to about four carbon atoms.

Specific examples of terminal and medial olefin monomers which can be used to prepare the olefin polymers from which the hydrocarbyl substituents are derived include ethylene, propylene, butene-1, butene-2, isobutene, pentene-1, hexene-1, heptene-1, octene-1, nonene-1, docene-1, pentene-2, propylene tetramer, diisobutylene, isobutylene trimer, butadiene-1, 2, butadiene-1, 3, pentadiene-1, 2, pentadiene-1, 3, isoprene hexadiene-1, 5, 2-chlorobutadiene-1, 3, 2-methylheptene-1, 3-cyclohexyl-butene-1, 3, 3-dimethylpentene-1, styrene-divinylbenzene, vinylacetate, allyl alcohol, 1-methyl-vinylacetate, acrylonitrile, ethylacrylate, ethyl-vinylether and methylvinylketone. Of these, the purely hydrocarbyl monomers are preferred and the terminal olefin monomers are especially preferred.

In a particularly advantageous embodiment of the invention, the olefin polymers are poly(isobutene)s such as obtained by polymerization of a $C_4$ refinery stream having a butene content of about 35 to about 75% by weight and an isobutene content of about 30 to about 60% by weight in the presence of a Lewis acid catalyst such as aluminium chloride or boron trifluoride. These polyisobutenes preferably contain predominantly (that is, greater than about 80% of the total repeat units) isobutene repeat units of the configuration.

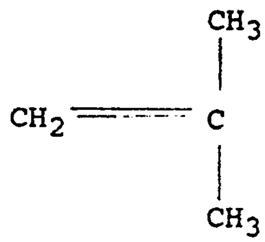

Preferred acids and anhydrides are the hydrocarbyl-substituted succinic acids and anhydrides represented by the formulae:

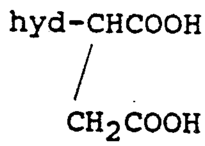

or

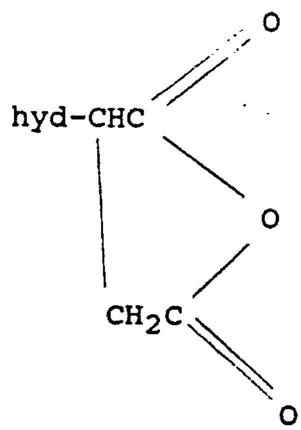

wherein "hyd" is the hydrocarbyl substituent.

Alternatively a hydrocarbyl-substituted olefinically unsaturated anhydride where the hydrocarbyl group is linear branched chain containing 8 to 24 carbon atoms, preferably a C10 to C12 alkenyl succinic anhydride or its corresponding acid may be used. Mixtures of acids may also be used.

The mono carboxylic acids with 5 to 25 carbon atoms preferably contain 10 to 20 carbon atoms and Examples include linear acids, iso acids oxo acids, neo acids and synthetic and naturally occuring fatty acids.

Examples of useful mono carboxylic acids are neo-decanoic acid, iso undecanoic acid, dodecanoic acid, oleanic $C_9$ and neo-heptanoic acid, n-heptanoic acid, oleic acid, stearic acid, linoleic acid and mixtures thereof.

The relative proportions of the components of the emulsifier system which should be used depends upon the nature of the emulsion to be formed. We prefer however that for every part by weight of sulphonic acid from which the salts are derived the system contain 0.1 to 1 part by weight of the di-carboxylic acid from which the salt is derived and also from 0.1 to 1 part by weight of whichever of the mono-carboxylic acid, non-ionic emulsifier and coupling agent. In this system we prefer that for every part of sulphonic acid there is present

0.3 to 0.6 parts by weight of the dicarboxylic acid
0.25 to 0.45 parts by weight of the mono-carboxylic acid
0.25 to 0.45 parts by weight of the non-ionic emulsifier
0.1 to 0.2 parts by weight of the coupling agent

The emulsifier system of the invention may contain co-emulsifiers to control the hydrophilic/lipophilic balance of the system according to the nature of the oil to be emulsified. When used we prefer to use non ionic co-emulsifiers or a blend of non ionic co-emulsifiers. Examples of suitable non ionic emulsifiers include amine oxides, ethoxylated phenols and C8 to C21 ethoxylated or propoxylated alcohols with 1 to 15 moles of ethylene oxide or propylene oxide or a mixture thereof. Typically decyl, dodecyl, monodecyl alcohols ethoxylated with 3 moles ethylene oxide.

Coupling agents may also be included in the emulsifier system and examples of coupling agent which may be used include non-ionic wetting agents which improve the compatibility of the components, any desired non-ionic wetting agent may be used, such as a condensation product of ethylene oxide, or

propylene oxide; a condensation product of a fatty acid or derivative, such as a derivative of a fatty acid, fatty alcohol, fatty amide or fatty amine, with ethylene oxide; and a reaction product obtained by the condensation of an oxyalkylaryl compound, such as a derivative of an alkylphenol or alkylnaphthol, with ethylene oxide or propylene oxide. It is preferable that the non-ionic wetting agents include the polyethoxyesters of fatty acids, the monooleate of a polyethylene glycol, the monolaurate of a polyethylene glycol, the polyethoxyethers or polypropoxyethers of alcohols, the condensation product of an alkylphenol such as dodecyl phenol with 12 moles of ethylene oxide, and the sulfonated product of the condensation of an alkylphenol or an alkylnaphthol with ethylene oxide.

The emulsifier system of the invention is a mixture of salts formed by neutralising the acids with an organic or inorganic base. We prefer to first make the mixture of the acids and neutralise with the base. When the base is organic it may be an amine or alcanolamine; where it is inorganic base it can be an alkali metal hydroxide or NH4OH. The preferred base is KOH preferred treat rate to avoid the system gelling. The amount of base is preferably such that the pH of the system is in the range of 8.5 to 9 when the product is diluted to 3 vol% in water of hardness 250 ppm calcium carbonate.

We prefer that the emulsifiable cutting oil for incorporation into bulk water contains from 3 to 35 wt%, preferably 3 to 25 wt%, more preferably 7 to 20 wt% of the emulsifier system. The amount of oil incorporated into water depends upon the nature and use of the fluid. Typically micro-emulsions contain from 2% to 10% by weight of oil and the milky emulsions contain from 4% to 10% by weight.

Where the fluids of the present invention are to be used for metal working they may be boron free although small amounts of boron may be required for anti-bacterial properties. Boron may be provided by incorporating boric acid or any other boron compound that forms boric acid upon being dissolved in water, such as metaboric acid or boric oxide. It is preferred to use boron compounds in combination with an amine since it is believed that the boric acid forms an addition product or salt with the amine which is a syrupy liquid and does not precipitate out of the cutting fluid. The emulsifiable oil may contain up to 30 wt% boric acid although we prefer that it contains from 2 to 6 wt% of boric acid to give no more than 1.0, preferably no more than 0.4 wt% boron in the final aqueous metal working fluid.

Where an amine is used in the fluids of this invention we prefer to use alkanolamines especially those which contain from one to three aliphatic radicals, each containing from one to four carbon atoms, and have at least one hydroxy group attached to a carbon atom, and include primary, secondary and tertiary alkylol amines such as mono-di-or triethanolamine. These amines are generally water-soluble and have no offensive odour. The preferred amine is diethanolamine, which ordinarily contains minor amounts of mono- or triethanolamine, and has no odour.

An aqueous metal working fluid embodying the invention may be used in all metal working operations but gives excellent results in applications in which the pressure per unit of area is relatively low, such as surface grinding operations especially where a number of pieces are being ground simultaneously. For heavy-duty applications, in which the pressure per unit of area is relatively high, an aqueous fluid embodying the invention preferably contains, in addition to the reaction product, antiwear additives such as phosphate esters, sulphurized hydrocarbons and copper passivator such as benzotriazole, tolyltriazole and its derivatives, thiadiazole and dimercapto thiadiazole.

Other ingredients which may be incorporated in the aqueous fluids include anti-foaming agents, biocides, anti-rust additives and extreme pressure additives although when using the systems of our invention it may not be necessary to use anti-foaming agents.

Although the presence of water in the emulsifiable oil is not essential the inclusion of water gives a control of its viscosity which is preferred to be below 500 centistokes at 20 °C for easier handling. When water is present we prefer the formulation contain from 5 to 60 wt% water.

For the production of micro emulsions the emulsifiable oil generally contains 5 to 35, more preferably 5 to 14 wt% oil although larger amounts could be used which may be all the oil required in the final fluid or further oil may be added. Whereas for milky emulsions the emulsifiable oils generally contain from 60 to 90 wt.% oil. Any type of oil may be used, mineral or synthetic and the mineral oils may be paraffinic or naphthenic and it may be necessary to adjust the emulsifier system within the scope of the invention according to the type of oil.

A benefit of using the emulsifier system of the present invention is that as well as emulsifying oils it may be used to emulsify liquids hitherto difficult to emulsify such as chlorinated paraffins and white spirit. For example it has previously been difficult to emulsify more than 20 wt.% of chlorinated paraffins whereas our system has emulsified as much as 40 wt.%.

In the preparation of an emulsifiable oil embodying the invention, the ingredients are mixed at ordinary temperatures to produce a water-miscible fluid. We prefer to first mix the emulsifier system and the oil together when any other additives and any water that may be needed may also be added at room

temperature, with stirring.

The ingredients which form an aqueous fluid embodying the invention may be mixed in any desired order, but it is usually convenient to mix the major ingredients to form a liquid of relatively large bulk with which the minor ingredients may be readily mixed.

The present invention is illustrated by the following examples in which the following emulsifier formulations were used.

| | Emulsifier 1 | Emulsifier 2 |
|---|---|---|
| | % | % |
| SA 119 | - | 36 |
| SA 149 | 35 | - |
| Pibsa 112 | 15 | 15 |
| Neo $C_{15}$ Acid Bottom | 12.5 | 12.5 |
| EXXAL $C_{12}$ - 3EO | 14 | 14 |
| PnB | 6.5 | 6.5 |
| KOH | 9.3 | 8.8 |
| Water | 7.7 | 7.2 |
| | Emulsifier 3 | Emulsifier 4 |
| | % | % |
| SA 119 | 37.5 | 36 |
| SA 149 | 15.0 | 15.0 |
| Pibsa 112 | 15.0 | 15.0 |
| Iso SA Acid | 11.0 | 11.0 |
| EXXAL 12 - 3EO | 14.0 | 14.0 |
| PnB | 6.0 | 6.0 |
| KOH | 8.6 | 9.4 |
| Water | 7.9 | 8.6 |

Notes:

- Pibsa 112 is a C68 (mean chain length) branched-chain alkenyl succinic anhydride
- PnB is propyleneglycol mono n-Butyl ether used as a coupling agent
- Exxal 12, 3EO is ethoxylated (3EO) dodecanol used as non-ionic emulsifier
- Sulphonic acid 149 is $C_{12}$ alkyl orthoxylene sulphonic acid
- Sulphonic acid 119 is $C_{24}$ alkyl benzene sulphonic acid
- Neo $C_{15}$ acid Bottom is a mixture of neo acids of average carbon number 15.

These emulsifier formulations were used to formulate emulsifiable cutting oils (ECO), hydraulic oils or coolants.

The latter are obtained by blending the emulsifier formulations with a naphthenic, paraffinic or synthetic base oil.

Typical microemulsion formulations comprise 10 to 30 mass% of the emulsifier formulation together with 5 to 40 mass% oil, 0 to 15 mass% coemulsifier (anionic or non ionic), 0 to 5 mass% coupling agent.

The exact choice of the emulsifier system is done according to the hydrophilic or lipophilic character of the basestock to be emulsified.

Other additives which can be added to the formulations include defoamers, rust inhibitors, extreme-pressure agents, lubricating agents, biocides, metal passivators etc. The addition of these may modify the hydrophilic/lipophilic balance of the formulation. This will require a readjustment of the EB treat and ratio.

The following are examples of emulsifiable cutting oil formulations (mass%) containing the emulsifier systems of the present invention - all parts are in wt%.

| a) milky emulsions | | | |
|---|---|---|---|
| Emulsifiable Oil | (1) | (2) | (3) |
| Emulsifier 1 | 14.0 | 5.4 | 4.5 |
| Emulsifier 2 | - | 14 | 13.5 |
| Shell oil LVI 50 | 86.0 | - | |
| Shell oil HVI 60 | - | 82.0 | - |
| Ninaes oil T 22 | - | 86.0 | |
| b) microemulsions | | | |
| | 4 | 5 | 6 |
| Emulsifier 1 | 4.2 | 13.0 | 19.0 |
| Emulsifier 2 | 8.8 | - | |
| The diethanolamine salt of tartaric acid | 46.1 | 45.2 | |
| Tall oil fatty acid | - | 1.5 | |
| Esso Stanco Base 90 | 9.4 | 9.4 | 75.0 |
| Water | 31.5 | 30.9 | 46.0 |
| Boric Acid | | | 4.0 |
| Alkanolamine | | | 3.0 |

Similar formulations using the samne basestocks have been made with Emulsifiers 3 and 4.

All emulsifiable oils have been converted into emulsions by putting 4% of the emulsifiable oil into water. All of them gave stable emulsions after one month.

To check the foaming characteristics and the anti-corrosion performances of the emulsifier systems of the invention, an emulsion containing 4% of the emulsifiable oil 1 plus 2% of the diethanolamine salt of tall oil fatty acids was compared with a similar emulsion based on natural sulfonate (Petronate).

The foam tendency is measured by the Cnomo D-65.5212 test and it was found that when using the formulation of the invention it took 5 hours to reach 1000 mls of foam whilst the other formulation produced 1000 mls in 3 minutes. The 1000 mls of foam declined to 300 mls in 5 minutes whilst the 1000 mls of foam into the natural sulphonate remained stable.

The formulations were also compared in the Paper Corrosion Test IP 287 and the break point with the formulation of the invention was found to be at 2.5 wt.% treat rate whereas with the natural sulphonate it was about 5 wt.%.

## Claims

1 An emulsifier system comprising a mixture of salts of

(i) a sulphonic acid,

(ii) a di-carboxylic acid containing from 10-500 carbon atoms together with one or more materials selected from

(a) a $C_5$-$C_{25}$ monocarboxylic acid or a salt thereof

(b) a coupling agent

(c) a non-ionic emulsifier

2 An emulsifier system according to claim 1 containing 0.1 to 1 part of the salt of the dicarboxylic acid from which the salt is derived for each part of the sulphonic acid from which the salt is derived.

3 An emulsifier system according to claim 2 containing from 0.1 to 1 part by weight of the monocarboxylic acid or salt thereof, the coupling agent and non-ionic emulsifier for each part of the sulphonic acid from which the salt is derived.

4 An emulsifier system according to any of the preceding claims containing for every part of sulphonic acid from 0.3 to 0.6 parts by weight of the dicarboxylic acid 0.25 to 0.45 parts by weight of a monocarboxylic acid 0.25 to 0.45 parts by weight of the non-ionic emulsifier 0.1 to 0.2 parts by weight of a coupling agent.

5 An emulsifier system according to any of the preceding claims in which the non-ionic emulsifier is an amine oxide, an ethoxylated phenol or a $C_8$ to $C_{21}$ ethoxylated or propoxylated alcohol.

6 An emulsifier system according to any of the preceding claims prepared by neutralizing a mixture of

the acids with a base.

7 An emulsifier system according to claim 6 in which the amount of base is such that the pH of the system is in the range 8.5 to 9 when the product is diluted to 3 column % in water of hardness 250 ppm calcium carbonate.

8 An additive concentrates for incorporation into emulsifiable oils containing the emulsifier system of any one of claims 1 to 7.

9 Emulsifiable oils containing the emulsifier system of any one of claims 1 to 7.

10 An emulsifiable oil according to claim 9 containing from 3 to 35 wt% of the emulsifier system and 97 to 65 wt% oil.

11 Emulsifiable oil according to claim 9 or claim 10 containing up to 60 wt% water.

12 Emulsifiable oil according to claim 11 containing 5 to 35 wt% oil.

13 Emulsifiable oil according to claim 11 containing 60 to 90 wt% oil.

14 Emulsifiable oil according to any of claims 11 to 13 in which the oil is a chlorinated paraffin.

15 Emulsifiable oil according to any of claims 11 to 13 in which the oil is white spirit.

16 An oil in water emulsion containing the emulsifier system of any of claims 1 to 7.

17 An oil in water emulsion containing the emulsifiable oil of claim 9 or claim 10.

18 An oil in water emulsion according to claim 12 or claim 13 containing from 2 % to 10 % of oil.

19 The use of an oil in water emulsion according to any of claims 16 to 18 as a metal working fluid.

European Patent Office

# EUROPEAN SEARCH REPORT

Application Number

EP 90 30 6346

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,L | FR-A-1 559 468 (ESSO RESEARCH AND ENGINEERING CO.) * Page 2, left-hand column, line 29 - page 5, left-hand column, line 20; examples 1,2 * (Document so quoted for it's casting doubt on the first deposit character of GB8913945 and thus validity of the convention priority claim) & US-A-3 507 790 (ESSO RESEARCH AND ENGINEERING CO.) --- | 1,5,8,9,16,19 | B 01 F 17/00<br>C 10 M 173/00<br>C 10 M 141/08 //<br>(C 10 M 173/00<br>C 10 M 129:40<br>C 10 M 129:42<br>C 10 M 135:10 )<br>(C 10 M 141/08<br>C 10 M 129:40<br>C 10 M 129:42<br>C 10 M 135:10 )<br>C 10 N 40:20 |
| X,L | EP-A-0 206 833 (EXXON CHEMICAL PATENTS INC.) * Abstract; page 1, line 10 - page 7, line 16; page 10, line 32 - page 12, line 11; examples 1,2,7; claims 1-7,9-15,17-22 * (Document so quoted for it's casting doubt on the first deposit character of GB8913945 and thus validity of the convention priority claim) --- | 1,3-5,7-11,16,19 | **TECHNICAL FIELDS SEARCHED (Int. Cl.5)** |
| A | US-A-4 636 326 (P.M. HERNANDEZ et al.) * Column 7, lines 39-46; column 8, line 9 - column 10, line 6; example 3 * ----- | 1,5,7,8,19 | B 01 F<br>C 10 M |

The present search report has been drawn up for all claims

| Place of search | Date of completion of the search | Examiner |
|---|---|---|
| THE HAGUE | 12-09-1990 | FISCHER W.H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document